**Europäisches Patentamt**

(19) **European Patent Office**

**Office européen des brevets**

(11) Veröffentlichungsnummer: **0 006 566**
**B1**

(12) # EUROPÄISCHE PATENTSCHRIFT

(45) Veröffentlichungstag der Patentschrift:
**12.05.82**

(51) Int. Cl.³: **G 02 F 1/133,** G 02 F 1/13

(21) Anmeldenummer: **79102014.2**

(22) Anmeldetag: **18.06.79**

(54) **Flüssigkristallzelle.**

(30) Priorität: **21.06.78 DE 2827258**

(43) Veröffentlichungstag der Anmeldung:
**09.01.80 Patentblatt 80/1**

(45) Bekanntmachung des Hinweises auf die Patenterteilung:
**12.05.82 Patentblatt 82/19**

(84) Benannte Vertragsstaaten:
**AT BE CH FR GB IT NL SE**

(56) Entgegenhaltungen:
**DE-A-2 732 513**
**DE-B-2 313 730**
**FR-A-2 270 625**
**JP-A-5 348 541**
**US-A-3 736 047**
**S. FLUGGE, »Handbuch der Physik«, Band 24,**
**1956, Seiten 473—495, Springer-Verlag Berlin—**
**Göttingen—Heidelberg**

(73) Patentinhaber: **SIEMENS AKTIENGESELLSCHAFT**
**Berlin und München, Postfach 22 02 61,**
**D-8000 München 22 (DE)**

(72) Erfinder: **Bechteler, Martin, Dr., Dipl.-Ing., Nelkenweg 10,**
**D-8011 Kirchheim, Ortsteil Heimstetten (DE)**
Erfinder: **Krüger, Hans, Dipl.-Phys., Peralohstrasse 13,**
**D-8000 München 83 (DE)**

## Flüssigkristallzelle

Die Erfindung betrifft eine Flüssigkristallzelle gemäß dem Oberbegriff des Anspruchs 1. Derartige Zellen sind in einer Vielzahl von Ausführungen bekannt (vgl. beispielsweise die DE-OS 2 458 883).

Bekanntlich wird Licht, das transparente Schichten durchsetzt, an Grenzflächen mit einem sich sprunghaft ändernden Brechungsindex teilweise zurückgeworfen. Aus diesem Grund reflektieren beispielsweise auch die Elektrodenbeläge einer Anzeige, und zwar in einem solchen Ausmaß, daß die Darstellungsqualitäten ohne spezielle Entspiegelungsmaßnahmen erheblich beeinträchtigt wären.

Eine Leitschicht ist dann vergleichsweise reflexionsarm, wenn sie eine Dicke hat, die der halben Wellenlänge des Lichts im Leitschichtmaterial entspricht, oder wenn sie — gemessen an der Lichtwellenlänge — relativ dünn ist. Die beiden Dimensionierungen haben eine Reihe von spezifischen Nachteilen: $\lambda/2$-Schichten, die beispielsweise bei $In_2O_3$-Elektroden ca. 150 nm dick sind, müssen exakt bemessen sein, sind vielfach bei bestimmten Lichtwellenlängen nicht mehr ausreichend entspiegelt (»Farbstich«) und führen bei Flüssigkristallzellen gewöhnlich zu Orientierungsstörungen an ihren Rändern. »Dünne« Leitschichten, denen man im allgemeinen eine Dicke von höchstens 25 nm gibt, sind relativ hochohmig und zeigen, vor allem wenn sie in einem CVD-Verfahren aufgebracht sind, immer noch deutlich wahrnehmbare Restreflexionen.

Man ist deshalb auch schon dazu übergegangen, reflexionsmindernde Zusatzschichten einzufügen (DE-OS 2 313 730 oder DE-OS 2 458 883). Diese Schichten, die sich gewöhnlich zwischen dem Substrat und der Elektrode befinden, eine Dicke von $\lambda/4$ haben und gemäß der DE-OS 2 458 883 einen Brechungsindex $n = \sqrt{n_{Substrat} \cdot n_{Flüssigkristall}}$ aufweisen sollten, liefern insofern noch keine voll befriedigenden Resultate, als die Reflexionsfaktoren in den Bereichen mit bzw. ohne Leitschicht erheblich voneinander abweichen. Natürlich ließen sich die Zusatzschichten zu »Antireflexionsbelägen« erweitern (US-PS 3 736 047 oder DE-OS 2 454 462). Die Fachwelt ist jedoch zu der Auffassung gelangt, daß ein Antireflexionsbelag zumindest bei Flüssigkristalldisplays den erheblichen Mehraufwand nicht rechtfertigen kann (vgl. hierzu M. Tobias, »International Handbook of Liquid Crystal Displays«, Ovum Press Ltd., London, 1975, Abschnitt 8.6.5.1). So behilft man sich in der Praxis damit, den Elektroden eine mehr oder weniger genau definierte Dicke zu geben, und nimmt dabei Spiegelungseffekte in Kauf.

Aufgabe der vorliegenden Erfindung ist es, eine Flüssigkristallzelle anzugeben, die eine Orientierungsschicht hat, deren Leitschichten vollkommen entspiegelt sind und die dennoch relativ einfach und kostengünstig hergestellt werden kann. Zur Lösung dieser Aufgabe wird erfindungsgemäß eine Flüssigkristallzelle mit den Merkmalen des Anspruchs 1 vorgeschlagen.

Die im Anspruch 1 angegebenen Relationen sind an sich schon seit Jahrzehnten bekannt (vgl. hierzu beispielsweise S. Flügge, »Handbuch der Physik«, Bd. 24, »Grundlagen der Optik«, Springer-Verlag, 1956, insbes. S. 490, mit weiteren Nachweisen). Wenn die Ergebnisse noch nicht für die Entspiegelung einer elektrooptischen Anzeige, insbes. einer Flüssigkristallzelle, herangezogen worden sind, so mag dies daran liegen, daß man an ihrer Anwendbarkeit gezweifelt hatte. Insbesondere mußte es fraglich erscheinen, ob Überzüge mit einem ausgeprägten Oberflächenprofil wie beispielsweise geriebene oder schräg aufgedampfte Orientierungsschichten einer Flüssigkristallzelle überhaupt dazu in der Lage sein könnten, Reflexionen einer anderen Schicht zu kompensieren.

Überraschenderweise hat sich jedoch herausgestellt, daß sich bei einem erfindungsgemäßen Display die Reflexionen an den drei Übergängen Trägerplatte/Leitschicht/Überzug/Medium gegenseitig derart aufheben, daß diese Grenzflächen für einen großen Bereich der Lichtwellenlänge vollständig entspiegelt wirken. Dies gilt auch dann, wenn man von den Idealdicken $\bar{d}_1$ und $\bar{d}_2$ abweicht. Experimente bestätigten, daß man im Einzelfall die Werte $\bar{d}_1$ und $\bar{d}_2$ um bis zu $\pm 50\%$ variieren kann, ohne merkliche Reflexionen oder Verfärbungen befürchten zu müssen. Dieser große Bemessungsspielraum ist besonders wertvoll: Zum einen brauchen die Schichtdicken nicht mehr so streng wie beispielsweise bei $\lambda/2$-Schichten eingehalten zu werden; zum anderen kann man von den Optimalwerten $\bar{d}_1$ bzw. $\bar{d}_2$ derart abgehen, daß die Anzeigefläche zugleich auch dort, wo die Leitschicht fehlt, entspiegelt ist. Als weiterer Vorteil kommt hinzu, daß die Elektroden bei geeigneter Materialwahl auch Stärken von weit über 25 nm erhalten können; damit werden Dickenbereiche mit sehr geringen Flächenwiderstandswerten zugänglich. Schließlich wirkt sich auch noch der Umstand günstig aus, daß erfindungsgemäß bemessene Schichten zwar gegen die Flüssigkristallschicht entspiegelt sind, gegen Luft jedoch reflektieren und daher beim Zusammenbau gut sichtbar sind. Somit kann man die beiden Trägerplatten ohne zusätzliche Hilfen, wie sie sonst erforderlich sind, bequem gegeneinander justieren.

Ein in der vorgeschlagenen Weise dimensioniertes Display ist übrigens selbst dann noch extrem reflexionsarm, wenn die Trägerplatten mit einer weiteren Schicht, beispielsweise einer Schutzschicht zwischen dem Substrat und der Leitschicht (DE-AS 2 313 730) versehen sind. Diese Zusatzschicht sollte dabei jedoch einen identischen oder doch sehr ähnlichen Brechungsindex wie die Unterlage haben. Andernfalls wäre das Gleichungssystem entsprechend zu erweitern.

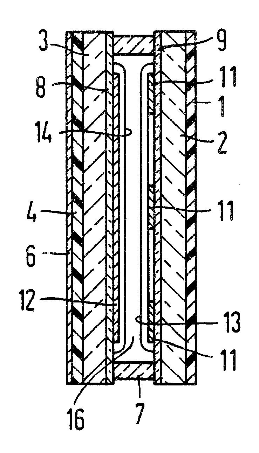

Die Erfindung wird nun anhand eines bevorzugten Ausführungsbeispiels in Verbindung mit der Figur näher erläutert.

0 006 566

Die Figur zeigt in einem etwas schematisierten Seitenschnitt ein Sieben-Segment-Flüssigkristalldisplay, das nach dem Prinzip der sog. Drehzelle arbeitet. Diese Zelle enthält im einzelnen einen vorderen Linearpolarisator 1, eine vordere Trägerplatte 2, eine hintere Trägerplatte 3, einen hinteren, zum vorderen gekreuzten Linearpolarisator 4 und einen Reflektor 6. Die beiden Trägerplatten sind über einen Rahmen 7 dicht miteinander verbunden und tragen auf ihren einander zugewandten Flächen jeweils eine Schutzschicht 8, 9, einen leitfähigen Belag (segmentierte Vorderelektrode mit Elektrodensegmenten 11, durchgehende Rückelektrode 12) sowie eine schrägaufgedampfte Orientierungsschicht 13, 14. Die vom Rahmen und den beiden Substraten begrenzte Kammer ist mit einer Flüssigkristallschicht 16 ausgefüllt. Weitere Einzelheiten bezüglich des Darstellungsprinzips sind der DE-AS 2 158 563 zu entnehmen. Im vorliegenden Beispiel bestehen die beiden Trägerplatten aus einem Glas mit einem Brechungsindex von 1,48. Die Flüssigkristallschicht ist ein Gemisch, das von der Fa. Hoffmann-La Roche unter der Bezeichnung ROTN 200 vertrieben wird; diese Mischung hat im Ruhezustand in Richtung der Plattennormalen eine optische Dichte von 1,78. Für die in einem Tauchverfahren aufgebrachte Schutzschicht ist ein Material auf $SiO_2$-Basis gewählt, dessen Brechungsindex dem der Glasplatten entspricht. Die Leitschichten enthalten im wesentlichen $In_2O_3$ ($n_{In_2O_3}=1,9$) und sind in einer CVD-Technik aufgetragen. Die Orientierungsschichten sind schräg aufgedampft und bestehen aus reinem $SiO_2$ ($n_{SiO_2}=1,46$ in Richtung der Plattennormalen). Bei diesen Brechungsindizes liefern die Gleichungen (1) und (2) für die Leitschicht eine Idealdicke $\bar{d}_1$ von 25,4 nm und für die Orientierungsschicht eine Idealdicke $\bar{d}_2$ von 23,5 nm, berechnet bei einer Wellenlänge $\lambda = 550$ nm.

In der Tabelle I sind für einige Beispiele die aus (1) und (2) ermittelten Dicken $\bar{d}_1$ bzw. $\bar{d}_2$ zusammengestellt. In diesen Beispielen sind $n_0$, $n_1$ und $n_3$ fest vorgesehen ($n_0 = 1,48$; $n_1 = 1,90$; $n_3 = 1,78$) und sind die Parameter $n_2$ und $\lambda$ variiert.

Tabelle I

| $n_2$ | $\bar{d}_1$ [nm] bei $\lambda = 500$ nm | $\bar{d}_2$ [nm] bei $\lambda = 500$ nm | $\bar{d}_1$ [nm] bei $\lambda = 550$ nm | $\bar{d}_2$ [nm] bei $\lambda = 550$ nm | $\bar{d}_1$ [nm] bei $\lambda = 600$ nm | $\bar{d}_2$ [nm] bei $\lambda = 600$ nm |
|---|---|---|---|---|---|---|
| 1.34 | 16.2 | 27.4 | 17.8 | 30.1 | 19.5 | 32.9 |
| 1.38 | 18.1 | 25.5 | 19.9 | 28.1 | 21.7 | 30.6 |
| 1.42 | 20.3 | 23.5 | 22.3 | 25.9 | 24.4 | 28.2 |
| 1.46 | 23.1 | 21.4 | 25.4 | 23.5 | 27.7 | 25.6 |
| 1.50 | 26.8 | 18.9 | 29.5 | 20.7 | 32.1 | 22.6 |
| 1.54 | 31.9 | 15.8 | 35.0 | 17.4 | 38.2 | 19.0 |
| 1.58 | 39.7 | 11.7 | 43.7 | 12.9 | 47.6 | 14.1 |
| 1.62 | 58.3 | 3.2 | 64.1 | 3.6 | 69.9 | 3.9 |

Den tabellierten Werten entnimmt man, daß die Wellenlänge einen nur geringen Einfluß auf die berechneten Idealdicken nimmt und daß mit wachsendem $n_2$ die Leitschicht immer dicker, der Überzug dagegen immer dünner wird. Dickere Elektroden sind wegen ihres homogeneren Gefüges und ihres höheren Flächenleitwertes generell zu bevorzugen; andererseits sollte der Überzug eine gewisse Mindestdicke nicht unterschreiten. So ist bei einer schrägbedampften Schicht zu beachten, daß bei einem Aufdampfwinkel von etwa 60° bzw. etwa 84° Schichtdicken von mindestens 10 nm die besten Resultate liefern und bei einem Schrägbedampfungswinkel von etwa 79° die Schicht mindestens 15 nm dick sein sollte.

In der Tabelle II sind einige Dielektrika, die sich als Überzug eignen, zusammen mit ihrem Brechungsindex für sichtbares Licht aufgeführt.

3

Tabelle II

| Überzugsmaterial | $n_2$ |
|---|---|
| $Al_2O_3$ | 1.63 |
| $SiO_x$ ($1 \leq x \leq 2$) | 1.46—1.90 |
| $SiO_2$ | 1.46 |
| $SnO_2$ | 2.1 |
| $TiO_y$ ($y \approx 2$) | 2.4—2.6 |
| MgO | 1.7 |
| $ZrO_2$ | 2.05 |
| $MgF_2$ | 1.38 |
| ZnS | 2.3 |

Mit Hilfe dieser oder ähnlicher Tabellen kann man die Entspiegelungsbedingungen auch dann mühelos ermitteln, wenn bestimmte Randbedingungen wie beispielsweise eine Mindestleitfähigkeit oder eine Mindeststärke für die Orientierungsschicht vorgegeben sind.

Es sei darauf hingewiesen, daß bei schrägbedampften Schichten die optische Dichte anisotrop ist und die tatsächlich vorhandene Dicke von Ort zu Ort schwankt. Dementsprechend ist in der Formel (1) und (2) derjenige Brechungsindexwert einzusetzen, den die Schicht gegenüber einem senkrecht auftreffenden Lichtstrahl definierter Polarisationsrichtung zeigt, und ist die aus (2) gewonnene Größe $\bar{d}_2$ als ein Mittelwert anzusehen.

Die Erfindung ist nicht auf das dargestellte Ausführungsbeispiel beschränkt. So kommen auch Flüssigkristallzellen in Frage, die eine andere Grenzflächenorientierung haben. Dabei spielt es keine Rolle, welche Textur die Flüssigkristallschicht hat oder welchen Anstelleinkel die Flüssigkristallmoleküle zur Substratebene einnehmen.

**Patentansprüche**

1. Flüssigkristallzelle mit einer Flüssigkristallschicht (16), die zwischen optisch verschiedenen Zuständen geschaltet werden kann und zwischen zwei Trägerplatten (2, 3) angeordnet ist, die auf ihren einander zugewandten Seiten jeweils eine elektrisch leitfähige Schicht (Leitschicht 11, 12) und über jeder Leitschicht eine dielektrische Schicht (13, 14) tragen, von denen wenigstens eine als Orientierungsschicht ausgebildet ist, dadurch gekennzeichnet, daß die Leitschicht (11, 12) und die dielektrische Schicht (13, 14) eine Dicke $d_1$ bzw. $d_2$ haben, die im Bereich $0,5 \, \bar{d}_1 \leq d_1 \leq 1,5 \, \bar{d}_1$ bzw. $0.5 \, \bar{d}_2 \leq d_2 \leq 1,5 \, \bar{d}_2$ liegen, wobei gilt

$$\bar{d}_1 = \frac{\lambda}{2 \pi n_1} \cdot \arctan \sqrt{\frac{A \cdot B}{C \cdot D}}$$

und

$$\bar{d}_2 = \frac{\lambda}{2 \pi n_2} \cdot \arctan \sqrt{\frac{A \cdot D}{C \cdot B}}$$

mit $\lambda$ = mittlere Wellenlänge des Betriebslichtes, $n_1$ = Brechungsindex der Leitschicht (11, 12), $n_2$ = Brechungsindex der dielektrischen Schicht (13, 14),

$$A = 1 - \frac{n_0}{n_3}, \quad B = \frac{n_0}{n_1} - \frac{n_1}{n_3}, \quad C = \frac{n_1}{n_2} - \frac{n_0 \cdot n_2}{n_1 \cdot n_3},$$

$$D = \frac{n_2}{n_3} - \frac{n_0}{n_2},$$

$n_0$ = Brechungsindex der Trägerplatte (2, 3) und

$n_3$ = Brechungsindex des Mediums (16) im Ruhezustand.

4

2. Flüssigkristallzelle nach Anspruch 1, dadurch gekennzeichnet, daß gilt $0.6\,\bar{d}_1 \le d_1 \le 1,4\,\bar{d}_1$ und $0,6\,\bar{d}_2 \le d_2 \le 1,4\,\bar{d}_2$, vorzugsweise $0,7\,\bar{d}_1 \le d_1 \le 1,3\,\bar{d}_1$ und $0,7\,\bar{d}_2 \le d_2 \le 1,3\,\bar{d}_2$, und insbesondere $0,85\,\bar{d}_1 \le d_1 \le 1,15\,\bar{d}_1$ und $0,85\,\bar{d}_2 \le d_2 \le 1,15\,\bar{d}_2$.

3. Flüssigkristallzelle nach Anspruch 1 oder 2, dadurch gekennzeichnet, daß die der Flüssigkristallschicht (16) zugewandte Oberfläche der Orientierungsschicht (13, 14) Erhebungen und Vertiefungen hat.

4. Flüssigkristallzelle nach Anspruch 3, dadurch gekennzeichnet, daß die Oberfläche der Orientierungsschicht (13, 14) ein System aus zueinander parallelen Rillen aufweist.

5. Flüssigkristallzelle nach Anspruch 4, dadurch gekennzeichnet, daß bei Wahl von Trägerplatten (2, 3) mit einem Brechungsindex $n_0 = 1,48 \pm 0,04$ sowie einer Flüssigkristallschicht (16) mit einem Brechungsindex $n_3 = 1,78 \pm 0,05$ die Leitschichten (11, 12) im wesentlichen aus $In_2O_3$ bestehen ($n_{In_2O_3} = 1,9$) und $50 \pm 5$ nm dick sind und daß die Orientierungsschichten (13, 14) aus einem vorzugsweise organischen Material mit einem Brechungsindex $n_2 = 1,6 \pm 0,04$ bestehen und $9,6 \pm 1$ nm dick sind.

6. Flüssigkristallzelle nach Anspruch 3, dadurch gekennzeichnet, daß die Orientierungsschicht (13, 14) schräg zur Trägerplatte (2, 3) aufgedampft ist.

7. Flüssigkristallzelle nach Anspruch 6, dadurch gekennzeichnet, daß bei Wahl von Trägerplatten (2, 3) mit einem Brechungsindex $n_0 = 1,48 \pm 0,04$ sowie einer Flüssigkristallschicht (16) mit einem Brechungsindex $n_3 = 1,78 \pm 0,05$ die Leitschichten (11, 12) im wesentlichen aus $In_2O_3$ bestehen ($n_{In_2O_3} = 1,9$) und $25,4 \pm 3$ nm dick sind und daß die Orientierungsschichten (13, 14) im wesentlichen aus $SiO_2$ bestehen ($n_{SiO_2} = 1,46$) und $23,5 \pm 3$ nm dick sind.

8. Flüssigkristallzelle nach einem der Ansprüche 1 bis 7, dadurch gekennzeichnet, daß die Trägerplatte (2, 3) unter der Leitschicht (11, 12) noch eine Schicht (8, 9) trägt und daß der Brechungsindex dieser zusätzlichen Schicht (8, 9) wenigstens angenähert gleich dem Brechungsindex der Trägerplatte (2, 3) ist.

## Claims

1. A liquid crystal cell comprising a liquid crystal layer (16) which can be switched between two optically different states and is arranged between two carrier plates (2, 3) which, on their sides facing one another, respectively carry an electrically conductive layer (conducting layer 11, 12) and a dielectric layer (13, 14) above each conducting layer, at least one of which layers forms an orientation layer, characterised in that the conducting layer (11, 12) and the dielectric layer (13, 14) have thicknesses $d_1$ and $d_2$ respectively, which thicknesses lie in the regions $0.5\,\bar{d}_1 \le d_1 \le 1.5\,\bar{d}_1$ and $0.5\,\bar{d}_2 \le d_2 \le 1.5\,\bar{d}_2$ respectively, where

$$\bar{d}_1 = \frac{\lambda}{2\pi n_1} \cdot \arctan\sqrt{\frac{A \cdot B}{C \cdot D}}$$

and

$$\bar{d}_2 = \frac{\lambda}{2\pi n_2} \cdot \arctan\sqrt{\frac{A \cdot D}{C \cdot B}}$$

with $\lambda$ = average wave length of the operating light, $n_1$ = refractive index of the conducting layer (11, 12), $n_2$ = refractive index of the dielectric layer (13, 14),

$$A = 1 - \frac{n_0}{n_3},\ B = \frac{n_0}{n_1} - \frac{n_1}{n_3},\ C = \frac{n_1}{n_2} - \frac{n_0 \cdot n_2}{n_1 \cdot n_3},$$

$$D = \frac{n_2}{n_3} - \frac{n_0}{n_2},$$

$n_0$ = refractive index of the carrier plate (2, 3) and

$n_3$ = refractive index of the medium (16) in the rest state.

2. A liquid crystal cell as claimed in Claim 1, characterised in that the following holds good: $0.6\,\bar{d}_1 \le d_1 \le 1.4\,\bar{d}_1$ and $0.6\,\bar{d}_2 \le d_2 \le 1.4\,\bar{d}_2$, preferably $0.7\,\bar{d}_1 \le d_1 \le 1.3\,\bar{d}_1$ and $0.7\,\bar{d}_2 \le d_2 \le 1.3\,\bar{d}_2$ and in particular $0.85\,\bar{d}_1 \le d_1 \le 1.15\,\bar{d}_1$ and $0.85\,\bar{d}_2 \le d_2 \le 1.15\,\bar{d}_2$.

3. A liquid crystal cell as claimed in Claim 1 or Claim 2, characterised in that the surface of the orientation layer (13, 14) which faces the liquid crystal layer (16), is provided with projections and recesses.

4. A liquid crystal cell as claimed in Claim 3, characterised in that the surface of the orientation layer (13, 14) is provided with a system of grooves which are parallel to one another.

5. A liquid crystal cell as claimed in Claim 4, characterised in that when carrier plates (2, 3) which have a refractive index $n_0 = 1.48 \pm 0.04$ a liquid crystal layer (16) which has a refractive index $n_3 = 1.78 \pm 0.05$ are selected, the conducting layers (11, 12) essentially consist of $In_2O_3$ ($n_{In2O3} = 1.9$) and have a thickness of $50 \pm 5$ nm, and that the orientation layers (13, 14) consist of a material which is preferably organic and has a refractive index $n_2 = 1.6 \pm 0.04$ and a thickness of $9.6 \pm 1$ nm.

6. A liquid crystal cell as claimed in Claim 3, characterised in that the orientation layer (13, 14) is vapour-deposited obliquely onto the carrier plate (2, 3).

7. A liquid crystal cell as claimed in Claim 6, characterised in that, when carrier plates (2, 3) which have a refractive index $n_0 = 1.48 > 0.04$ and a liquid crystal layer (16) which has a refractive index $n_3 = 1.78 \pm 0.05$ are selected, the conducting layers (11, 12) essentially consist of $In_2O_3$ ($n_{In2O3} = 1.9$) and have a thickness of $25.4 \pm 3$ nm, and that the orientation layers (13, 14) essentially consist of $SiO_2$ ($n_{SiO2} = 1.46$) and have a thickness of $23.5 \pm 3$ nm.

8. A liquid crystal cell as claimed in one of Claims 1 to 7, characterised in that the carrier plate (2, 3) carries another layer (8, 9) beneath the conducting layer (11, 12), and that the refractive index of this additional layer (8, 9) is at least approximately equal to the refractive index of the carrier plate (2, 3).

## Revendications

1. Cellule à cristaux liquides comprenant une couche (16) de cristaux liquides, qui peut être commutée dans deux états différents du point de vue optique et qui est disposée entre deux plaques (2, 3) formant support, lesquelles portent sur leur face en regard respectivement une couche conductrice de l'électricité (couches 11, 12 conductrices) et sur chaque couche conductrice une couche (13, 14) diélectrique, dont l'une au moins forme une couche d'orientation, caractérisée en ce que la couche (11, 12) conductrice et la couche (13, 14) diélectrique ont une épaisseur $d_1$ et $d_2$ respectivement qui se trouvent dans la plage $0,5\,\overline{d}_1 \leq d_1 \leq 1,5\,\overline{d}_1$ et $0,5\,\overline{d}_2 \leq d_2 \leq 1,5\,\overline{d}_2$, formules dans lesquelles:

$$\overline{d}_1 = \frac{\lambda}{2\,\pi\,n_1} \cdot \text{arctg} \left| \sqrt{\frac{A \cdot B}{C \cdot D}} \right.$$

et

$$\overline{d}_2 = \frac{\lambda}{2\,\pi\,n_2} \cdot \text{arctg} \left| \sqrt{\frac{A \cdot D}{C \cdot B}} \right.$$

$\lambda$ étant égal à la longueur d'onde moyenne de la lumière utilisée pour le fonctionnement, $n_1$ étant égal à l'indice de réfraction de la couche (11, 12) conductrice, $n_2$ étant égal à l'indice de réfraction de la couche (13=,14) diélectrique,

$$A = 1 - \frac{n_0}{n_3}, \quad B = \frac{n_0}{n_1} - \frac{n_1}{n_3}, \quad C = \frac{n_1}{n_2} - \frac{n_0 \cdot n_2}{n_1 \cdot n_3},$$

$$D = \frac{n_2}{n_3} - \frac{n_0}{n_2},$$

$n_0$ = étant égal à l'indice de réfraction des plaques (2, 3) supports, et

$n_3$ = étant égal à l'indice de réfraction du milieu (16) à l'état de repos.

2. Cellule à cristaux liquides suivant la revendication 1, caractérisée en ce que $0,6\,\overline{d}_1 \leq d_1 \leq 1,4\,\overline{d}_1$ et $0,6\,\overline{d}_2 \leq d_2\,1,4\,\overline{d}_2$, de préférence $0,7\,\overline{d}_1 \leq d_1 \leq 1,3\,\overline{d}_1$ et $0,7\,\overline{d}_2 \leq d_2 \leq 1,3\,\overline{d}_2$, et notamment $0,85\,\overline{d}_1 \leq d_1 \leq 1,15\,\overline{d}_1$ et $0,85\,\overline{d}_2 \leq d_2 \leq 1,15\,\overline{d}_2$.

3. Cellule à cristaux liquides selon la revendication 1 ou 2, caractérisée en ce que la face de la couche (13, 14) d'orientation tournée vers la couche (16) de cristaux liquides présente des surélévations et des cavités.

4. Cellule à cristaux liquides suivant la revendication 3, caractérisée en ce que la surface de la couche (13, 14) d'orientation présente un système de nervures parallèles entre elles.

5. Cellule à cristaux liquides suivant la revendication 4, caractérisée en ce que, lorsque l'on choisit des plaques support (2, 3) ayant un indice de réfraction $n_0 = 1,48 \pm 0,04$ ainsi qu'une couche (16) de cristaux liquides ayant un indice de réfraction $n_3 = 1,78 \pm 0,05$, les couches (11, 12) conductrices sont constituées essentiellement en $In_2O_3$ ($n_{In2O3} = 1,9$) et ont une épaisseur de $50 \pm 5$ nm et les couches (13, 14) d'orientation sont en une substance de préférence organique ayant un indice de réfraction $n_2 = 1,6 \pm 0,04$ et ont une épaisseur de $9,6 \pm 1$ nm.

6. Cellule à cristaux liquides suivant la revendication 3, caractérisée en ce que la couche (13, 14) d'orienttation est obtenue par évaporation en biais par rapport aux plaques supports (2, 3).

7. Cellule à ristaux liquides suivant la revendication 6. caractérisée en ce que, lorsque l'on choisit des plaques support (2, 3) ayant un indice de réfraction $n_0 = 1,48 \pm 0,04$ ainsi qu'une couche (16) de cristaux liquides ayant un indice de réfraction $n_3 = 1,78 \pm 0,05$, les couches (11, 12) conductrices sont essentiellement en $In_2O_3$ ($n_{In_2O_3} = 1,9$) et ont une épaisseur de $25,4 \pm 3$ nm et les couches (13, 14) d'orientation sont essentiellement en $SiO_2$ ($n_{SiO_2} = 1,46$) et ont une épaisseur de $23,5 > 3$ nm.

8. Cellule à cristaux liquides suivant l'une des revendications 1 à 7, caractérisée en ce que les plaques support (2, 3) portent sous la couche (11, 12) conductrice une autre couche (8, 9) et l'indice de réfraction de cette couche (8, 9) supplémentaire est au moins sensiblement égal à l'indice de réfraction des plaques supports (2, 3).